(19) Europäisches Patentamt
European Patent Office
Office européen des brevets

(11) EP 2 802 932 B1

## (12) EUROPÄISCHE PATENTSCHRIFT

(45) Veröffentlichungstag und Bekanntmachung des Hinweises auf die Patenterteilung:
**04.03.2020** Patentblatt 2020/10

(21) Anmeldenummer: **13700149.1**

(22) Anmeldetag: **09.01.2013**

(51) Int Cl.:
***G02B 27/64*** *(2006.01)*

(86) Internationale Anmeldenummer:
**PCT/EP2013/050282**

(87) Internationale Veröffentlichungsnummer:
**WO 2013/104657 (18.07.2013 Gazette 2013/29)**

### (54) OPTISCHES SYSTEM ZUR ABBILDUNG EINES OBJEKTS

OPTICAL SYSTEM FOR IMAGING AN OBJECT

SYSTÈME OPTIQUE PERMETTANT DE REPRODUIRE UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2012 DE 102012200519**
**13.01.2012 US 201261586272 P**

(43) Veröffentlichungstag der Anmeldung:
**19.11.2014** Patentblatt 2014/47

(73) Patentinhaber: **Carl Zeiss AG**
**73447 Oberkochen (DE)**

(72) Erfinder:
• **TAUTZ, Volker**
**35578 Wetzlar (DE)**
• **MUTZ, Erhard**
**35647 Waldsolms (DE)**
• **BACH, Christian**
**35418 Buseck (DE)**

(74) Vertreter: **Tongbhoyai, Martin**
**Freischem & Partner**
**Patentanwälte mbB**
**Salierring 47-53**
**50677 Köln (DE)**

(56) Entgegenhaltungen:
| | |
|---|---|
| EP-A1- 1 731 944 | DE-A1-102004 037 481 |
| DE-C2- 3 933 255 | DE-C3- 2 353 101 |
| JP-A- H11 109 256 | US-A- 3 504 957 |
| US-A- 3 531 176 | US-A- 3 608 995 |
| US-A1- 2003 063 380 | |

**Beschreibung**

Die Erfindung betrifft ein optisches System zur Abbildung eines Objekts, wobei das optische System ein Objektiv, eine Bildstabilisierungseinheit und ein Okular aufweist. Insbesondere ist das optische System als ein binokulares Fernglas, als ein monokulares Fernglas, als ein Spektiv oder als ein Fernrohr ausgebildet.

Das oben bezeichnete optische System wird beispielsweise in einem Fernrohr oder einem Fernglas eingesetzt. Das durch das Fernrohr oder das Fernglas von einem Beobachter erfasste Bild wird oft verwackelt wahrgenommen, da Zitterbewegungen oder Drehbewegungen der Hände des Benutzers, aber auch Bewegungen des Untergrundes, wiederum Bewegungen des optischen Systems verursachen. Um dieses zu umgehen, ist es bekannt, Bilder in einem optischen System zu stabilisieren. Bekannte Lösungen verwenden Stabilisierungseinrichtungen zur Stabilisierung des Bildes mittels einer mechanischen Einrichtung und/oder einer elektronischen Einrichtung. Ferner sind sogenannte passive Stabilisierungen und aktive Stabilisierungen bekannt, wie nachfolgend noch näher erläutert wird.

Eine passive Stabilisierung ist aus der DE 23 53 101 C3 bekannt. In dieser Druckschrift ist ein optisches System in Form eines Fernrohrs beschrieben, das ein Objektiv, eine Bildstabilisierungseinheit in Form eines Prismenumkehrsystems sowie ein Okular aufweist. Von dem Objektiv in Richtung des Okulars gesehen sind zunächst das Objektiv, dann die Bildstabilisierungseinheit und dann das Okular entlang einer optischen Achse des optischen Systems angeordnet. Das Prismenumkehrsystem ist kardanisch in einem Gehäuse des Fernrohrs gelagert. Hierunter wird verstanden, dass das Prismenumkehrsystem derart in dem Gehäuse des Fernrohrs angeordnet ist, dass das Prismenumkehrsystem um zwei zueinander rechtwinklig angeordnete Achsen drehbar gelagert ist. Zur drehbaren Lagerung wird eine Vorrichtung verwendet, die als Kardanik bezeichnet wird. Die beiden vorgenannten Achsen schneiden sich in einem Gelenkpunkt. Bei dem bekannten optischen System ist es nun vorgesehen, den Gelenkpunkt mittig zwischen einer bildseitigen Hauptebene des Objektivs und einer objektseitigen Hauptebene des Okulars anzuordnen. Das kardanisch gelagerte Prismenumkehrsystem wird aufgrund seiner Trägheit durch auftretende Drehzitterbewegungen nicht bewegt (passive Stabilisierung). Es bleibt somit fest im Raum stehen. Auf diese Weise wird eine Bildverwackelung, die aufgrund der Drehzitterbewegung des Gehäuses entsteht, kompensiert.

Eine aktive Stabilisierung ist beispielsweise aus der DE 39 33 255 C2 bekannt. Aus dieser Druckschrift ist ein binokulares Fernglas mit einer Bildstabilisierung bekannt, das ein Prismenumkehrsystem aufweist. Das Prismenumkehrsystem weist Porro-Prismen auf, die jeweils eine Kippachse aufweisen. Die Porro-Prismen sind um ihre jeweilige Kippachse schwenkbar ausgebildet. Zur Schwenkung der Porro-Prismen sind Motoren vorgesehen (aktive Stabilisierung). Die Schwenkung erfolgt in Abhängigkeit einer Zitterbewegung, die ein Wackeln eines beobachteten Bildes verursacht, sodass eine Bildverschlechterung vermieden wird.

Ein weiteres Beispiel einer bekannten passiven Stabilisierung ist aus der DE 28 34 158 C3 bekannt. Aus dieser Druckschrift ist ein Fernrohr mit einer Anordnung bestehend aus einem Objektiv, einem Prismenumkehrsystem sowie einem Okular bekannt, wobei zwei Teilfernrohre vorgesehen sind, die jeweils eine der vorgenannten Anordnung aufweisen. Die Prismen der Prismenumkehrsysteme beider Teilfernrohre sind in einer gemeinsamen Kardanik in einem Gehäuse gelagert. Der Gelenkpunkt liegt in der Mitte zwischen der bildseitigen Hauptebene des Objektivs und der objektseitigen Hauptebene des Okulars. Zudem liegt der Gelenkpunkt im Schwerpunkt der Kardanik. Es hat sich nun aber gezeigt, dass bei Fernrohren mit einer Vergrößerung von größer als 8 jedes der Prismenumkehrsysteme näher am entsprechenden Okular als am jeweiligen Objektiv angeordnet ist. Damit jedes Prismenumkehrsystem in der Kardanik im Gleichgewicht ist, ist es notwendig, mindestens ein Ausgleichgewicht vorzusehen. Die Verwendung eines Ausgleichsgewichts ist jedoch nicht unbedingt wünschenswert, da hierdurch das Gewicht des Fernrohrs größer wird.

Um die Verwendung eines Ausgleichsgewichts zu vermeiden, kann beispielsweise eine aktive Stabilisierung verwendet werden, wie sie bereits weiter oben beschrieben wurde. Dann ist es nicht mehr erforderlich, den Gelenkpunkt des Prismenumkehrsystems in die Mitte zwischen der bildseitigen Hauptebene des Objektivs und der objektseitigen Hauptebene des Okulars zu legen. Vielmehr kann die Lage des Gelenkpunktes frei auf der optischen Achse des optischen Systems gewählt werden. Liegt jedoch der Gelenkpunkt näher am Okular als am Objektiv, hat sich ergeben, dass das Prismenumkehrsystem um einen Winkel (Prismenkippwinkel) entgegen der Kippung des Gehäuses gekippt werden sollte, der größer als der Betrag des Winkels der Kippung des Gehäuses ist. Der Prismenkippwinkel der Kippung relativ zum Objektiv und relativ zum Okular zusätzlich zu der Zitterbewegung verursacht für die Abbildung eines Objekts einen Bildfehler in Form von Koma, sodass die Bildgüte verringert wird. Demnach erzeugt das Prismenumkehrsystem diese Koma. Eine Verschlechterung der Bildgüte ist aber nicht wünschenswert.

Aus der US 6,067,194 ist ein weiteres optisches System mit einer passiven Stabilisierung bekannt. Dieses bekannte optische System weist ein Objektiv, ein Umkehrsystem sowie ein Okular auf. Das Umkehrsystem weist mehrere Elemente auf. So weist es einen Umlenkspiegel, ein Schmidt-Prisma und ein Prisma zur 180°-Umlenkung auf. Das Okular sowie das Prisma zur 180°-Umlenkung sind fest mit einem Gehäuse verbunden und werden aufgrund einer Zitterbewegung eines Benutzers mitbewegt. Das Schmidt-Prisma und eine Linse mit negativer Brechkraft sind als eine einzelne Baugruppe um eine horizontale Achse schwenkbar angeordnet. In der Baugruppe selbst ist wiederum eine vertikale Achse realisiert, um die eine weitere Baugruppe bestehend aus dem Objektiv und dem Umlenkspiegel schwenkbar ist. Zur Bildstabilisierung ist es vorgesehen, dass das Schmidt-Prisma und die Linse mit negativer Brechkraft durch ihre Trägheit um die horizontale Achse schwenken. Darüber hinaus können das Objektiv und der Umlenkspiegel zusätzlich um die vertikale Achse schwenken. Die beiden Achsen (also die horizontale Achse und die vertikale Achse) schneiden sich nicht in einem gemeinsamen Schnittpunkt. Es handelt sich demnach nicht um einen Gelenkpunkt einer Kardanik, wie sie oben beschrieben ist. Die US 3,608,995 offenbart die Merkmale des Oberbegriffs von Anspruch 1. Die US 3,531,176 offenbart ein optisches System zur Abbildung eines Objekts mit einer Meniskuslinse in der Bildstabilisierungseinheit.

Der Erfindung liegt demnach die Aufgabe zugrunde, ein optisches System mit einer Bildstabilisierung anzugeben, das zum einen auf eine Verwendung von Gegengewichten verzichtet und zum anderen die von einem Umkehrsystem eingebrachten Bildfehler, insbesondere Koma, kompensiert oder nicht auftreten lässt.

Erfindungsgemäß wird diese Aufgabe mit einem optischen System mit den Merkmalen des Anspruchs 1 gelöst. Weitere Merkmale der Erfindung ergeben sich aus der nachfolgenden Beschreibung, den nachfolgenden Ansprüchen und/oder den beigefügten Figuren.

Erfindungsgemäß weist das optische System zur Abbildung eines Objekts mindestens ein erstes Objektiv, mindestens eine erste Bildstabilisierungseinheit und mindestens ein erstes Okular auf. Ferner ist es vorgesehen, dass von dem ersten Objektiv in Richtung des ersten Okulars gesehen zunächst das erste Objektiv, dann die erste Bildstabilisierungseinheit und dann das erste Okular entlang einer ersten optischen Achse angeordnet sind. Die erste Bildstabilisierungseinheit ist kardanisch um einen ersten Gelenkpunkt drehbar gelagert. Wie bereits oben genannt, wird unter einer kardanischen Lagerung der ersten Bildstabilisierungseinheit verstanden, dass die erste Bildstabilisierungseinheit derart angeordnet ist, dass die erste Bildstabilisierungseinheit um zwei zueinander rechtwinklig angeordnete Achsen drehbar gelagert ist, nämlich um eine erste Achse und um eine zweite Achse. Der Schnittpunkt der ersten Achse und der zweiten Achse (sowie gegebenenfalls der ersten optische Achse) ist der erste Gelenkpunkt. Ferner ist es vorgesehen, dass der erste Gelenkpunkt zwischen dem ersten Objektiv und dem ersten Okular angeordnet ist. Darüber hinaus ist es vorgesehen, dass die erste Bildstabilisierungseinheit eine erste Linseneinheit und mindestens ein erstes optisches Element umfasst, wobei die erste Linseneinheit und das erste optische Element derart angeordnet sind, dass die erste Linseneinheit zusammen mit dem ersten optischen Element kardanisch um den ersten Gelenkpunkt drehbar gelagert ist. Dabei wird vorstehend und auch nachstehend unter einer Linseneinheit eine Einheit verstanden, die nur eine einzelne Linse oder mindestens zwei Linsen (beispielsweise in Form einer Linsengruppe) aufweist.

Zum einen wurde überraschenderweise festgestellt, dass für ein optisches System gemäß der Erfindung, das eine Vergrößerung von größer als 8 aufweist, eine Bildstabilisierungseinheit in der oben beschriebenen Form derart angeordnet werden kann, dass kein Gegengewicht zur Austarierung der Bildstabilisierungseinheit mehr notwendig ist. Zum anderen hat sich überraschender Weise gezeigt, dass aufgrund einer Verkippung der Bildstabilisierungseinheit keine störende Koma auftritt oder die auftretende Koma so gering ist, dass es von einem Benutzer als nicht störend wahrgenommen wird. Somit werden die Nachteile des Standes der Technik vermieden.

Bei einer Ausführungsform des erfindungsgemäßen optischen Systems ist es zusätzlich vorgesehen, dass die erste Linseneinheit zwischen dem ersten Objektiv und dem ersten optischen Element angeordnet ist. Somit weist das erfindungsgemäße optische System entlang der ersten optischen Achse folgende Reihenfolge der Einheiten auf: erstes Objektiv - erste Linseneinheit - erstes optisches Element- erstes Okular.

Bei einer weiteren Ausführungsform des erfindungsgemäßen optischen Systems ist es zusätzlich vorgesehen, dass die erste Linseneinheit eine erste Brennweite aufweist und dass das erste Objektiv eine zweite Brennweite aufweist. Ferner gilt die folgende Beziehung für die erste Brennweite und die zweite Brennweite:

$$|f_1| > 2 \cdot f_2$$

$f_1$ entspricht der ersten Brennweite und $f_2$ entspricht der zweiten Brennweite. Es hat sich überraschenderweise gezeigt, dass bei Wahl der ersten Brennweite und der zweiten Brennweite gemäß dieser Beziehung die weiter oben genannten Vorteile verstärkt werden.

Erfindungsgemäß ist die erste Linseneinheit zur Vermeidung einer störenden Koma als eine erste Meniskuslinse ausgebildet und weist negative Brechkraft auf. Diese kann beispielsweise derart ausgebildet sein, dass die erste Meniskuslinse eine erste konkave Seite aufweist, welche in Richtung des ersten Objektivs orientiert ist.

Bei einer Ausführungsform des erfindungsgemäßen optischen Systems ist es zusätzlich vorgesehen, dass das optische System ein erstes Gehäuse aufweist, wobei das erste Objektiv, die erste Bildstabilisierungseinheit und das erste Okular in dem ersten Gehäuse angeordnet sind.

Bei einem wiederum weiteren Ausführungsbeispiel des erfindungsgemäßen optischen Systems ist es zusätzlich oder alternativ vorgesehen, dass das optische System mindestens ein zweites Objektiv, mindestens eine zweite Bildstabilisierungseinheit und mindestens ein zweites Okular aufweist. Von dem zweiten Objektiv in Richtung des zweiten Okulars gesehen sind zunächst das zweite Objektiv, dann die zweite Bildstabilisierungseinheit und dann das zweite Okular entlang einer zweiten optischen Achse angeordnet. Die zweite Bildstabilisierungseinheit ist kardanisch um einen zweiten Gelenkpunkt drehbar gelagert, wobei hinsichtlich des Begriffs der kardanischen Lagerung auf weiter oben verwiesen wird. Es gilt entsprechendes auch hier. Der zweite Gelenkpunkt ist der Schnittpunkt von zwei zueinander rechtwinklig angeordneten Achsen, nämlich einer dritten Achse und einer vierten Achse, sowie der zweiten optischen Achse. Der zweite Gelenkpunkt ist zwischen dem zweiten Objektiv und dem zweiten Okular angeordnet. Darüber hinaus ist es vorgesehen, dass die zweite Bildstabilisierungseinheit eine zweite Linseneinheit und mindestens ein zweites optisches Element umfasst, wobei die zweite Linseneinheit und das zweite optische Element derart angeordnet sind, dass die zweite Linseneinheit zusammen mit dem zweiten optischen Element kardanisch um den zweiten Gelenkpunkt drehbar gelagert ist. Bei einer weiteren Ausführungsform des erfindungsgemäßen optischen Systems ist es zusätzlich vorgesehen, dass die zweite Linseneinheit zwischen dem zweiten Objektiv und dem zweiten optischen Element angeordnet ist.

Bei einem wiederum weiteren Ausführungsbeispiel des erfindungsgemäßen optischen Systems ist es zusätzlich vorgesehen, dass die zweite Linseneinheit eine dritte Brennweite aufweist und dass das zweite Objektiv eine vierte Brennweite aufweist. Für die dritte Brennweite und die vierte Brennweite gilt folgende Beziehung:

$$\left| f_3 \right| > 2 \cdot f_4$$

$f_3$ entspricht der dritten Brennweite und $f_4$ entspricht der vierten Brennweite. Bei Wahl der dritten Brennweite und der vierten Brennweite gemäß dieser Beziehung werden die weiter oben genannten Vorteile verstärkt.

Auch bei den vorgenannten Ausführungsbeispielen ist es zusätzlich oder alternativ vorgesehen, dass die zweite Linseneinheit nur eine Einzellinse aufweist oder dass die zweite Linseneinheit mindestens zwei Linsen, beispielsweise in Form einer Linsengruppe, aufweist.

Bei einem wiederum weiteren Ausführungsbeispiel des erfindungsgemäßen optischen Systems ist es zusätzlich vorgesehen, dass das optische System mindestens eines der folgenden Merkmale aufweist:

- die zweite Linseneinheit weist negative Brechkraft auf;
- die zweite Linseneinheit ist als eine zweite Meniskuslinse ausgebildet; oder
- die zweite Linseneinheit ist als eine zweite Meniskuslinse ausgebildet, wobei die zweite Meniskuslinse eine zweite konkave Seite aufweist, welche in Richtung des zweiten Objektivs orientiert ist.

Bei einem weiteren Ausführungsbeispiel des erfindungsgemäßen optischen Systems ist es zusätzlich vorgesehen, dass das optische System ein zweites Gehäuse aufweist, wobei das zweite Objektiv, die zweite Bildstabilisierungseinheit und das zweite Okular in dem zweiten Gehäuse angeordnet sind.

Erfindungsgemäß ist das erste optische Element als erstes Prismenumkehrsystem ausgebildet.

Darüber hinaus ist es bei einem weiteren Ausführungsbeispiel des erfindungsgemäßen optischen Systems zusätzlich vorgesehen, dass das zweite optische Element als zweites Umkehrsystem ausgebildet ist. Beispielsweise ist das zweite optische Element als zweites Prismenumkehrsystem oder als zweites Linsenumkehrsystem ausgebildet.

Bei einem wiederum weiteren Ausführungsbeispiel des erfindungsgemäßen optischen Systems ist es vorgesehen, dass das erste Gehäuse mit dem zweiten Gehäuse über mindestens eine Knickbrücke verbunden ist. Die Knickbrücke weist ein an dem ersten Gehäuse angeordnetes erstes Scharnierteil und ein an dem zweiten Gehäuse angeordnetes zweites Scharnierteil auf. Die Knickbrücke ermöglicht die Einstellung des optischen Systems derart, dass das erste Gehäuse und das zweite Gehäuse auf die Pupillendistanz eines Benutzers eingestellt werden können. Das erste Gehäuse und das zweite Gehäuse werden demnach relativ zueinander angeordnet, sodass das erste Gehäuse an einem der beiden Augen des Benutzers angeordnet ist und sodass das zweite Gehäuse an dem anderen der beiden Augen des Benutzers angeordnet ist.

Bei einem wiederum weiteren Ausführungsbeispiel des erfindungsgemäßen optischen Systems ist es zusätzlich vorgesehen, dass das erste Gehäuse als Tubus ausgebildet ist. Zusätzlich oder alternativ hierzu ist es vorgesehen, dass das zweite Gehäuse als Tubus ausgebildet ist. Bei einem wiederum weiteren Ausführungsbeispiel des erfindungsgemäßen optischen Systems ist das optische System als Fernglas oder Fernrohr ausgebildet.

Bei einer weiteren Ausführungsform des erfindungsgemäßen optischen Systems ist eine erste Bildebene vorgesehen, wobei von dem ersten Objektiv in Richtung des ersten Okulars gesehen zunächst das erste Objektiv, dann die erste Bildstabilisierungseinheit, dann die erste Bildebene und dann das erste Okular entlang der ersten optischen Achse des optischen Systems angeordnet sind. Die erste Bildstabilisierungseinheit weist mindestens eine erste Eintrittsfläche und mindestens eine erste Austrittsfläche auf. Die erste Eintrittsfläche ist zum ersten Objektiv gerichtet. Die erste Austrittsfläche hingegen ist zur ersten Bildebene gerichtet. Ferner ist die erste Austrittsfläche in einem Bereich von 1 mm bis 20 mm beabstandet zur ersten Bildebene angeordnet. Beispielsweise ist die erste Austrittsfläche in einem Bereich von 2 mm bis 15 mm beabstandet zur ersten Bildebene angeordnet oder die erste Austrittsfläche ist in einem Bereich von 3 mm bis 12 mm beabstandet zur ersten Bildebene angeordnet. Entsprechendes kann für die zweite Bildstabilisierungseinheit ebenfalls vorgesehen sein. Diese Ausführungsformen beruhen auf der überraschenden Erkenntnis, dass die Anordnung der Austrittsfläche der Bildstabilisierungseinheit relativ zur Bildebene in dem vorgenannten Bereich es ermöglicht, das Trägheitsmoment der Bildstabilisierungseinheit derart zu verringern, dass Motoren mit einer beispielsweise im Vergleich zum Stand der Technik relativ geringen Kraft zur Verstellung der Bildstabilisierungseinheit verwendet werden können (beispielsweise Piezo-Antriebe). Gleichzeitig ist es möglich, kleinere Bildstabilisierungseinheiten als im Stand der Technik zu verwenden, ohne dass Abbildungseigenschaften des erfindungsgemäßen optischen Systems sich verschlechtern.

Bei einer weiteren Ausführungsform des erfindungsgemäßen optischen Systems ist es vorgesehen, dass optische System als binokulares Fernglas, als monokulares Fernglas, als Spektiv oder als Fernrohr auszubilden. Insbesondere ist es vorgesehen, dass das optische System eine Vergrößerung im Bereich von 8 bis 80 aufweist.

Die Erfindung wird nun anhand von Ausführungsbeispielen mittels Figuren näher beschrieben. Dabei zeigen

Figur 1 ein optisches System in Form eines Fernglases mit einer Knickbrücke;

Figur 2 eine schematische Darstellung eines ersten optischen Teilsystems des Fernglases gemäß Figur 1;

Figur 3 eine weitere schematische Darstellung des ersten optischen Teilsystems des Fernglases gemäß Figur 1;

Figur 4 eine schematische Darstellung eines zweiten optischen Teilsystems des Fernglases gemäß Figur 1;

Figur 5 eine weitere schematische Darstellung des zweiten optischen Teilsystems des Fernglases gemäß Figur 1; sowie

Figur 6 eine weitere schematische Darstellung des ersten optischen Teilsystems bzw. des zweiten optischen Teilsystems.

Die Erfindung wird nachfolgend anhand eines optischen Systems in Form eines binokularen Fernglases 1 besprochen (nachfolgend nur Fernglas genannt). Es wird aber explizit darauf hingewiesen, dass die Erfindung nicht auf ein binokulares Fernglas eingeschränkt ist. Vielmehr ist die Erfindung für jedes optische System geeignet, beispielsweise auch bei einem Fernrohr.

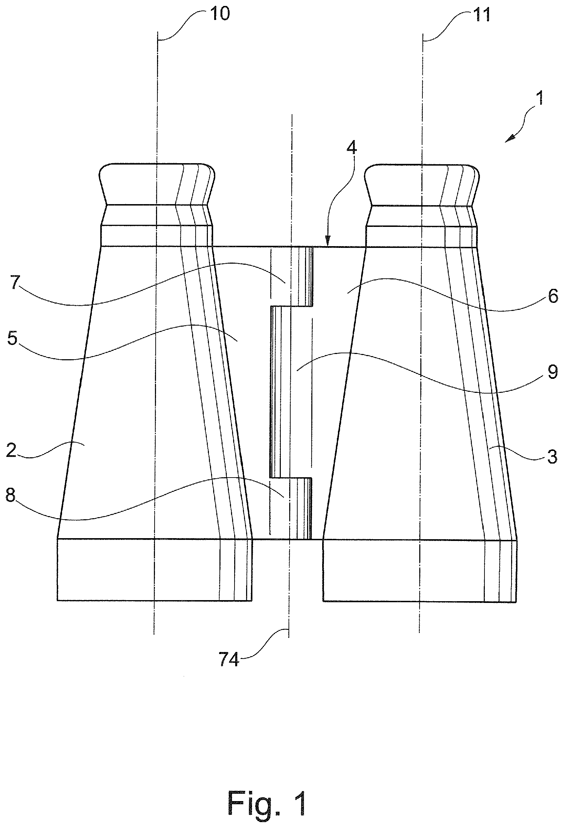

**Figur 1** zeigt eine erste schematische Darstellung des Fernglases 1, welches ein tubusförmiges erstes Gehäuseteil 2 und ein tubusförmiges zweites Gehäuseteil 3 aufweist. Durch das erste Gehäuseteil 2 verläuft eine erste optische Achse 10. Hingegen verläuft durch das zweite Gehäuseteil 3 eine zweite optische Achse 11. Das erste Gehäuseteil 2 ist mit dem zweiten Gehäuseteil 3 über eine Knickbrücke 4 verbunden. Die Knickbrücke 4 weist ein erstes Scharnierteil 5 auf, welches an dem ersten Gehäuseteil 2 angeformt ist. Ferner weist die Knickbrücke 4 ein zweites Scharnierteil 6 auf, welches an dem zweiten Gehäuseteil 3 angeordnet ist. Das erste Scharnierteil 5 weist ein erstes Aufnahmeteil 7 und ein zweites Aufnahmeteil 8 auf, zwischen denen ein drittes Aufnahmeteil 9 des zweiten Scharnierteils 6 angeordnet ist. Durch das erste Aufnahmeteil 7, das zweite Aufnahmeteil 8 sowie das dritte Aufnahmeteil 9 verläuft ein Achsbolzen (nicht dargestellt), sodass die relative Position des ersten Gehäuseteils 2 und des zweiten Gehäuseteils 3 um eine Gelenkachse 74 zueinander eingestellt werden kann. Auf diese Weise ist es möglich, das erste Gehäuseteil 2 und das zweite Gehäuseteil 3 auf die Pupillendistanz eines Benutzers einzustellen, sodass zum einen das erste Gehäuseteil 2 an dem einen der beiden Augen des Benutzers angeordnet ist und so dass zum anderen das zweite Gehäuseteil 3 an dem anderen der beiden Augen des Benutzers angeordnet ist.

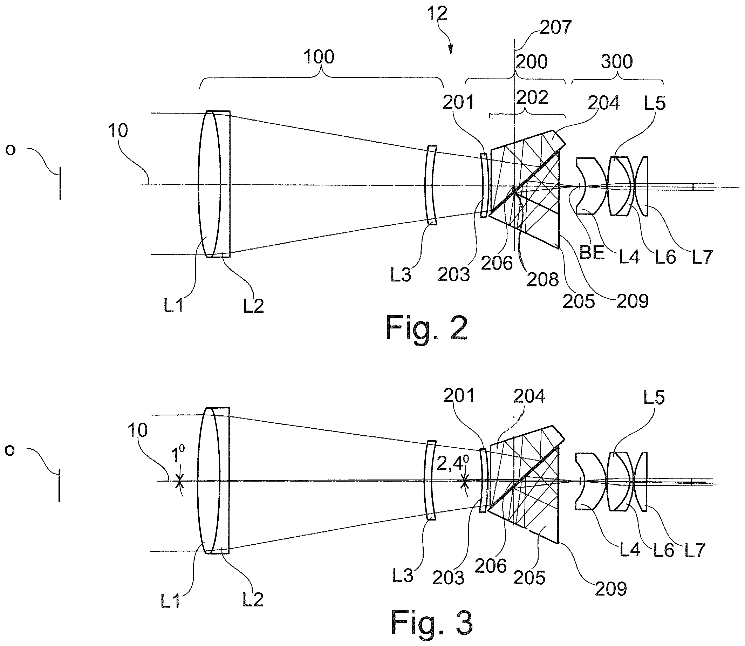

**Figur 2** zeigt eine schematische Darstellung einer Ausführungsform eines ersten optischen Teilsystems 12 des Fernglases 1 zur Abbildung eines Objekts O. Das erste optische Teilsystem 12 ist in dem ersten Gehäuseteil 2 (vgl. **Figur 1**) angeordnet. Das erste optische Teilsystem 12 weist ein erstes Objektiv 100, eine erste Bildstabilisierungseinheit 200 und ein erstes Okular 300 auf. Vom ersten Objektiv 100 in Richtung des ersten Okulars 300 gesehen sind entlang der ersten optischen Achse 10 zunächst das erste Objektiv 100, dann die erste Bildstabilisierungseinheit 200 und dann das erste Okular 300 angeordnet.

Das erste Objektiv 100 umfasst 3 Linsen, nämlich eine erste Linse L1, eine zweite Linse L2 und eine dritte Linse L3. Die erste Linse L1 und die zweite Linse L2 bilden ein Kittglied. Die dritte Linse L3 ist als Einzellinse ausgebildet. Ferner ist die dritte Linse L3 als Fokussierelement ausgebildet und ist entlang der ersten optischen Achse 10 zur Fokussierung axial verschiebbar.

Die erste Bildstabilisierungseinheit 200 umfasst zum einen eine erste Linseneinheit 201 und ein erstes Prismenumkehrsystem 202. Die erste Linseneinheit 201 wird aus einer Meniskuslinse mit negativer Brechkraft gebildet. Ferner weist die erste Linseneinheit 201 eine erste konkave Seite 203 auf, welche in Richtung des ersten Objektivs 100 orientiert ist. Das erste Prismenumkehrsystem 202 weist ein erstes Prisma 204 und ein zweites Prisma 205 auf. Die Form und die Ausgestaltung des ersten Prismas 204 und des zweiten Prismas 205 sind geeignet wählbar. Beispielsweise können das erste Prisma 204 und das zweite Prisma 205 als Schmidt-Pechan-Prismensystem, als Porro-Prismensystem erster Art, als Porro-Prismensystem zweiter Art, als Uppendahl-Prismensystem oder als Abbe-König-Prismensystem ausgebildet sein.

Die erste Linseneinheit 201 und das erste Prismenumkehrsystem 202 bilden eine Einheit. Sie sind derart miteinander verbunden, dass sie sich gemeinsam bewegen. Die erste Bildstabilisierungseinheit 200 ist kardanisch in dem Gehäuseteil 2 gelagert. Sie dreht sich somit um einen ersten Gelenkpunkt 206 um zwei Achsen, nämlich um eine erste Achse 207 und um eine hierzu rechtwinklig angeordnete zweite Achse 208, welche in die Blattebene hineinragt. Der erste Gelenkpunkt 206 ist der Schnittpunkt der ersten Achse 207 und der zweiten Achse 208. Er liegt auf der ersten optischen Achse 10.

Das erste Okular 300 setzt sich aus mehreren Einzellinsen zusammen, nämlich einer vierten Linse L4, einer fünften Linse L5, einer sechsten Linse L6 und einer siebten Linse L7. Die fünfte Linse L5 und die sechste Linse L6 bilden ein Kittglied.

Zwischen der ersten Bildstabilisierungseinheit 200 und dem ersten Okular 300 ist eine erste Bildebene BE angeordnet. Das zweite Prisma 205 weist eine erste Austrittsfläche 209 auf, welche in einem Bereich von 1 mm bis 20 mm beabstandet zur ersten Bildebene BE angeordnet. Beispielsweise ist die erste Austrittsfläche 209 in einem Bereich von 2 mm bis 15 mm beabstandet zur ersten Bildebene BE angeordnet, oder die erste Austrittsfläche 209 ist in einem Bereich von 3 mm bis 12 mm beabstandet zur ersten Bildebene BE angeordnet.

Zur Kompensation einer Zitterbewegung des Fernglases 1 bzw. des ersten Gehäuseteils 2 aufgrund einer Bewegung des Benutzers des Fernglases 1 oder aufgrund einer Bewegung des Untergrundes, auf dem sich ein Benutzer befindet, wird die erste Bildstabilisierungseinheit 200, also sowohl die erste Linseneinheit 201 als auch das erste Prismenumkehrsystem 202, um einen vorgebbaren Winkel um den ersten Gelenkpunkt 206 gedreht, beispielsweise im Bereich von - 3° bis + 3°. Die Bewegung der ersten Bildstabilisierungseinheit 200 kann dabei entweder passiv oder aktiv erfolgen. Eine passive Bewegung ist natürlich keine Bewegung gegenüber der Umgebung an sich, da dass Fernglas 1 entgegenbewegt und die erste Bildstabilisierungseinheit 200 im Bezug auf die Umgebung "stehenbleibt". Dennoch wird hier von einer passiven Bewegung gesprochen. Bei einer aktiven Bewegung werden beispielsweise Motoren (nicht dargestellt) eingesetzt, um die erste Bildstabilisierungseinheit 200 um den entsprechenden Winkel zu drehen. Als Motoren eignen sich beispielsweise Piezo-Antriebe. **Figur 2** zeigt die erste Bildstabilisierungseinheit 200 in einem nicht gedrehten Zustand. Die **Figur 3** zeigt eine weitere Darstellung des ersten optischen Teilsystems 12 des Fernglases 1 gemäß der **Figur 2**. Gleiche Baueinheiten sind daher mit gleichen Bezugszeichen versehen. Im Unterschied zu der **Figur 2** ist das Fernglas 1 um ca. 1° um einen Drehpunkt auf einer Eintrittsfläche des Objektivs 100 im Uhrzeigersinn aufgrund einer Zitterbewegung gedreht. Die erste Bildstabilisierungseinheit 200 ist um einen vorgebbaren Winkel um den ersten Gelenkpunkt 206 relativ zu dem ersten Gehäuseteil 2 entgegengekippt, beispielsweise im Bereich von 0,5° bis 3°. Einige Ausführungsbeispiele sehen einen vorgebbaren Winkel von 2,4° vor.

Die erste Linseneinheit 201 weist eine negative Brechkraft auf. Hierdurch ergibt sich, dass man die Okularbrennweite und die Vergrößerung des Fernglases 1 derart wählen kann, dass die Brennweite des Objektivs 100 derart kurz gehalten werden kann, dass der Gesamtaufbau des Fernglases 1 hinsichtlich seiner Länge nicht größer als der Stand der Technik ist. Ein Ausführungsbeispiel ist weiter unten genannt.

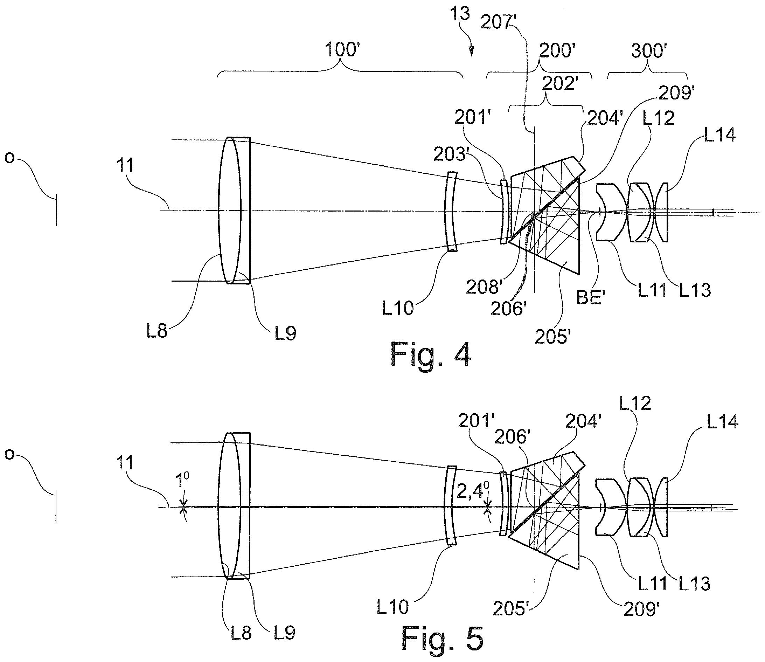

Die **Figur 4** zeigt eine schematische Darstellung einer Ausführungsform eines zweiten optischen Teilsystems 13 des Fernglases 1 zur Abbildung des Objekts O. Das zweite optische Teilsystem 13 ist in dem zweiten Gehäuseteil 3 (vgl. **Figur 1**) angeordnet. Das zweite optische Teilsystem 13 weist ein zweites Objektiv 100', eine zweite Bildstabilisierungseinheit 200' und ein zweites Okular 300' auf. Vom zweiten Objektiv 100' in Richtung des zweiten Okulars 300' gesehen sind entlang der zweiten optischen Achse 11 zunächst das zweite Objektiv 100', dann die zweite Bildstabilisierungseinheit 200' und dann das zweite Okular 300' angeordnet. Nachfolgend wird auf den Aufbau des zweiten Objektivs 100', der zweiten Bildstabilisierungseinheit 200' und des zweiten Okular 300' eingegangen.

Auch das zweite Objektiv 100' umfasst 3 Linsen, nämlich eine achte Linse L8, eine neunte Linse L9 und eine zehnte Linse L10. Die achte Linse L8 und die neunte Linse L9 bilden ein Kittglied. Die zehnte Linse L10 ist als Einzellinse ausgebildet. Ferner ist die zehnte Linse L10 als Fokussierelement ausgebildet und ist entlang der zweiten optischen Achse 11 zur Fokussierung axial verschiebbar.

Die zweite Bildstabilisierungseinheit 200' ist im Grunde wie die erste Bildstabilisierungseinheit 200 ausgebildet. So umfasst die zweite Bildstabilisierungseinheit 200' zum einen eine zweite Linseneinheit 201' und ein zweites Prismenumkehrsystem 202'. Die zweite Linseneinheit 201' wird aus einer Meniskuslinse mit negativer Brechkraft gebildet. Ferner weist die zweite Linseneinheit 201' eine zweite konkave Seite 203' auf, welche in Richtung des zweiten Objektivs 100' orientiert ist. Das zweite Prismenumkehrsystem 202' weist wiederum ein drittes Prisma 204' und ein viertes Prisma 205' auf. Die Form und die Ausgestaltung des dritten Prismas 204' und des vierten Prismas 205' sind geeignet wählbar. Beispielsweise können das dritte Prisma 204' und das vierte Prisma 205' als Schmidt-Pechan-Prismensystem, als Porro-Prismensystem erster Art, als Porro-Prismensystem zweiter Art, als Uppendahl-Prismensystem oder als Abbe-König-Prismensystem ausgebildet sein.

Auch die zweite Linseneinheit 201' und das zweite Prismenumkehrsystem 202' bilden eine Einheit. Sie sind derart miteinander verbunden, dass sie sich gemeinsam bewegen. Die zweite Bildstabilisierungseinheit 200' ist kardanisch in dem zweiten Gehäuseteil 3 gelagert. Es dreht sich somit um einen zweiten Gelenkpunkt 206' um zwei Achsen, nämlich um eine dritte Achse 207' und um eine hierzu rechtwinklig angeordnete vierte Achse 208', welche in die Blattebene hineinragt. Die dritte Achse 207' und die vierte Achse 208' schneiden sich in dem zweiten Gelenkpunkt 206', der auf der zweiten optischen Achse 11 angeordnet ist.

Das zweite Okular 300' setzt sich ebenfalls aus mehreren Einzellinsen zusammen, nämlich einer elften Linse L11, einer zwölften Linse L12, einer dreizehnten Linse L13 und einer vierzehnten Linse L14. Die zwölfte Linse L12 und die dreizehnte Linse L13 bilden ein Kittglied. Zwischen der zweiten Bildstabilisierungseinheit 200' und dem zweiten Okular 300' ist eine zweite Bildebene BE' angeordnet. Das vierte Prisma 205' weist eine zweite Austrittsfläche 209' auf, welche in einem Bereich von 1 mm bis 20 mm beabstandet zur zweiten Bildebene BE' angeordnet ist. Beispielsweise ist die zweite Austrittsfläche 209' in einem Bereich von 2 mm bis 15 mm beabstandet zur zweiten Bildebene BE' angeordnet, oder die zweite Austrittsfläche 209' ist in einem Bereich von 3 mm bis 12 mm beabstandet zur zweiten Bildebene BE' angeordnet.

Zur Kompensation einer Zitterbewegung des Fernglases 1 bzw. des Gehäuseteils 3 aufgrund einer Bewegung des Benutzers des Fernglases 1 oder aufgrund einer Bewegung des Untergrundes, auf dem sich ein Benutzer befindet, wird die zweite Bildstabilisierungseinheit 200', also sowohl die zweite Linseneinheit 201' als auch das zweite Prismenumkehrsystem 202', um einen vorgebbaren Winkel um den zweiten Gelenkpunkt 206' gedreht, beispielsweise im Bereich von - 3° bis + 3°. Die Bewegung der zweiten Bildstabilisierungseinheit 200' kann dabei entweder passiv oder aktiv erfolgen. Hierzu wird auch auf weiter oben verwiesen. Bei einer aktiven Bewegung werden beispielsweise Motoren (nicht dargestellt) eingesetzt, um das zweite Prismenumkehrsystem 202' und die zweite Linseneinheit 201' um den gewünschten Winkel zu drehen. Beispielsweise werden als Motoren Piezo-Antriebe verwendet. **Figur 4** zeigt die zweite Bildstabilisierungseinheit 200' in einem nicht gedrehten Zustand. Die **Figur 5** zeigt eine weitere Darstellung des zweiten optischen Teilsystems 13 des Fernglases **1** gemäß der **Figur 4**. Gleiche Baueinheiten sind daher mit gleichen Bezugszeichen versehen. Im Unterschied zu der **Figur 4** ist das Fernglas 1 um ca. 1° um einen Drehpunkt auf einer Eintrittsfläche des Objektivs 100' im Uhrzeigersinn aufgrund einer Zitterbewegung gedreht. Die zweite Bildstabilisierungseinheit 200' ist um einen vorgebbaren Winkel um den zweiten Gelenkpunkt 206' relativ zu dem zweiten Gehäuseteil 3 entgegengekippt, beispielsweise im Bereich von 0° bis 3°. Einige Ausführungsbeispiele sehen einen vorgebbaren Winkel von 2,4° vor.

Wie oben bereits erwähnt, weist die zweite Linseneinheit 201' negative Brechkraft auf. Hierdurch ergibt sich, dass man die Okularbrennweite und die Vergrößerung des Fernglases 1 derart wählen kann, dass die Brennweite des zweiten Objektivs 100' derart kurz gehalten werden kann, sodass der Gesamtaufbau des Fernglases 1 hinsichtlich seiner Länge nicht größer als der Stand der Technik ist. Ein Ausführungsbeispiel ist weiter unten genannt.

Im Grunde können das erste optische Teilsystem 12 und das zweite optische Teilsystem 13 einen identischen Aufbau aufweisen. Beispielsweise sind das erste optische Teilsystem 12 und das zweite optische Teilsystem 13, die oben beschrieben wurden, identisch aufgebaut. Allerdings wird explizit darauf hingewiesen, dass die beiden optischen Teilsysteme 12 und 13 nicht zwingend identisch aufgebaut sein müssen.

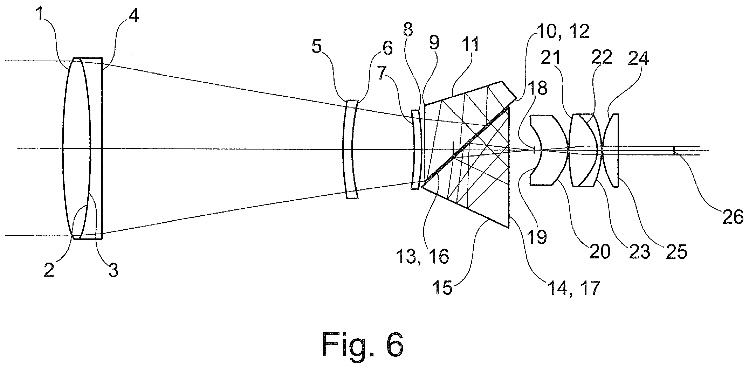

**Figur 6** zeigt das erste optische Teilsystem 12 bzw. das zweite optische Teilsystem 13, allerdings nur mir einer Flächenkennzeichnung. Das erste optische Teilsystem 12 bzw. das zweite optische Teilsystem 13 weist bei den hier beschriebenen Ausführungsbeispielen die in der nachfolgenden Tabelle zusammengefassten Eigenschaften auf.

| Fläche | Radien [mm] | Dicken Abstände [mm] | Glas | $n_e$ | $n_{c'}$ | $n_{F'}$ | $n_g$ |
|---|---|---|---|---|---|---|---|
| 1 | 81,751 | | | 1,000000 | 1,000000 | 1,000000 | 1,000000 |
| 2 | -124,101 | 7,200 | S-BSM10 | 1,625400 | 1,620010 | 1,631030 | 1,636371 |
| 3 | -112,205 | 0,228 | | 1,000000 | 1,000000 | 1,000000 | 1,000000 |
| 4 | -354,852 | 3,500 | S-TIH6 | 1,812640 | 1,797520 | 1,829740 | 1,847295 |
| 5 | 199,532 | 63,634 | | 1,000000 | 1,000000 | 1,000000 | 1,000000 |
| 6 | 76,078 | 2,200 | S-FSL5 | 1,489150 | 1,485690 | 1,492670 | 1,495961 |
| 7 | -66,724 | 16,566 | | 1,000000 | 1,000000 | 1,000000 | 1,000000 |
| 8 | -87,836 | 1,500 | S-FSL5 | 1,489150 | 1,485690 | 1,492670 | 1,495961 |
| 9 | U | 1,000 | | 1,000000 | 1,000000 | 1,000000 | 1,000000 |
| 10 | U | 9,214 | N-BK7 | 1,518720 | 1,514720 | 1,522830 | 1,526680 |
| 11 | U | 14,781 | N-BK7 | 1,518720 | 1,514720 | 1,522830 | 1,526680 |
| 12 | U | 9,890 | N-BK7 | 1,518720 | 1,514720 | 1,522830 | 1,526680 |
| 13 | U | 0,600 | | 1,000000 | 1,000000 | 1,000000 | 1,000000 |
| 14 | U | 6,983 | N-BK7 | 1,518720 | 1,514720 | 1,522830 | 1,526680 |

(fortgesetzt)

| Fläche | Radien [mm] | Dicken Abstände [mm] | Glas | $n_e$ | $n_{c'}$ | $n_{F'}$ | $n_g$ |
|---|---|---|---|---|---|---|---|
| 15 | U | 20,574 | N-BK7 | 1,518720 | 1,514720 | 1,522830 | 1,526680 |
| 16 | U | 13,649 | N-BK7 | 1,518720 | 1,514720 | 1,522830 | 1,526680 |
| 17 | U | 12,340 | N-BK7 | 1,518720 | 1,514720 | 1,522830 | 1,526680 |
| 18 | U | 5,550 | | 1,000000 | 1,000000 | 1,000000 | 1,000000 |
| 19 | -8,785 | 2,965 | | 1,000000 | 1,000000 | 1,000000 | 1,000000 |
| 20 | -11,885 | 6,940 | S-BAL35 | 1,591430 | 1,586660 | 1,596370 | 1,601031 |
| 21 | 52,330 | 0,220 | | 1,000000 | 1,000000 | 1,000000 | 1,000000 |
| 22 | -10,669 | 7,550 | S-BAL35 | 1,591430 | 1,586660 | 1,596370 | 1,601031 |
| 23 | -21,135 | 1,100 | S-TIH53 | 1,855040 | 1,838070 | 1,874310 | 1,894195 |
| 24 | 16,430 | 0,200 | | 1,000000 | 1,000000 | 1,000000 | 1,000000 |
| 25 | -165,480 | 4,450 | S-BAL35 | 1,591430 | 1,586660 | 1,596370 | 1,601031 |
| 26 | U | 14,600 | | 1,000000 | 1,000000 | 1,000000 | 1,000000 |
| | | | | 1,000000 | 1,000000 | 1,000000 | 1,000000 |

In der oben genannten Tabelle sind die einzelnen Flächen der einzelnen optischen Einheiten und deren Radien angegeben. Ferner ist der Abstand des Scheitelpunkts einer ersten Fläche zu dem Scheitelpunkt der nächsten Fläche angegeben. Dies gibt ebenfalls die Dicke der einzelnen optischen Einheiten wieder. Ferner ist mit n die Brechzahl bezeichnet, wobei diese für verschiedene Linien angegeben ist. Darüber hinaus ist die Glassorte der jeweiligen optischen Einheit angegeben, wobei die Notation der Glassorten sich auf Glassorten der Unternehmen OHARA und SCHOTT bezieht .

Die Vergrößerung des in der Tabelle beschriebenen Ausführungsbeispiels beträgt 15. Ferner betragen die Brennweite des ersten Objektivs 100 bzw. des zweiten Objektivs 100' 167,40 mm, die Brennweite der ersten Linseneinheit 201 bzw. der zweiten Linseneinheit 201' -581,09 mm, die Brennweite des ersten Objektivs 100 zusammen mit der ersten Linseneinheit 201 bzw. des zweiten Objektivs 100' zusammen mit der zweiten Linseneinheit 201' 187,34 mm sowie die Brennweite des ersten Okulars 300 bzw. des zweiten Okulars 300' 12,48 mm.

Überlegungen haben nun ergeben, dass fast keine Koma durch die für die Stabilisierung des Bildes vorgesehenen Kippungen durch die erste Bildstabilisierung 200 und die zweite Bildstabilisierungseinheit 200' verursacht wird. Bei dem Fernglas 1 wird die Bildgüte bei der Bildstabilisierung nicht durch eine bei der Kippung der jeweiligen Bildstabilisierungseinheit verursachte Koma verschlechtert. Die erste Linseneinheit 201 sowie die zweite Linseneinheit 201' haben nur einen geringen Einfluss oder keinen Einfluss auf die Bildstabilisierung. Die erste Linseneinheit 201 bzw. die zweite Linseneinheit 201' bewirkt, dass bei einem für die Bildstabilisierung gekippten ersten Prismenumkehrsystem 202 bzw. ersten Prismenumkehrsystem 202' keine störende Koma auftritt oder die zusätzlich auftretende Koma so gering ist, dass sie als nicht störend wahrgenommen wird.

Damit der Einfluss der ersten Linseneinheit 201 bzw. der zweiten Linseneinheit 201' auf die Bildgüte möglichst gering ist, ist es von Vorteil, wenn die erste Linseneinheit 201 bzw. die zweite Linseneinheit 201' gewisse Eigenschaften aufweisen. So haben Überlegungen ergeben, dass die erste Linseneinheit 201 bzw. die zweite Linseneinheit 201' meniskusförmig ausgebildet sein sollte und dass die konkave Seite 203 bzw. 203' der ersten Linseneinheit 201 bzw. der zweiten Linseneinheit 201' in Richtung des ersten Objektivs 100 bzw. zweiten Objektivs 100' zeigen sollte. Ferner haben Überlegungen ergeben, dass die erste Linseneinheit 201 bzw. die zweite Linseneinheit 201' derart angeordnet werden soll, dass sie sich zwischen dem Objektiv 100 bzw. 100' und dem Prismenumkehrsystem 202 bzw. 202' befindet. Ferner sollte für die Brennweite die folgende Bedingung gelten.

$$\left| f_{Linseneinheit} \right| > 2 \cdot f_{Objektiv}$$

Bei Wahl der Brennweiten gemäß dieser Beziehung werden die weiter oben genannten Vorteile verstärkt.

Für das erste Objektiv 100 und das zweite Objektiv 100' können alle geeignete Objektivtypen eingesetzt werden. Das in den Ausführungsbeispielen gezeigte Objektiv in Form eines dreilinsigen Objektivs mit einer möglichen Innenfokussierung ist nur ein mögliches Beispiel. Auch für das erste Okular 300 und das zweite Okular 300' können alle geeignete Okulartypen eingesetzt werden. Das im Ausführungsbeispiel gezeigte vierlinsige Okular ist nur ein mögliches Beispiel.

Ausführungsformen der Erfindung sehen vor, dass das optische System gemäß der Erfindung eine Vergrößerung im Bereich von 8 bis 80 aufweist. Bei Ausführungsbeispielen mit großer Vergrößerung (beispielsweise über 18) können als erste Linseneinheit 201 und als zweite Linseneinheit 201' optische Glieder bestehend aus mehreren Linsen verwendet werden, um Farbfehler zu vermeiden.

**Bezugszeichenliste**

| | |
|---|---|
| 1 | Fernglas |
| 2 | erstes Gehäuseteil |
| 3 | zweites Gehäuseteil |
| 4 | Knickbrücke |
| 5 | erstes Scharnierteil |
| 6 | zweites Scharnierteil |
| 7 | erstes Aufnahmeteil |
| 8 | zweites Aufnahmeteil |
| 9 | drittes Aufnahmeteil |
| 10 | erste optische Achse |
| 11 | zweite optische Achse |
| 12 | erstes optisches Teilsystem |
| 13 | zweites optisches Teilsystem |

| | |
|---|---|
| 74 | Gelenkachse |

| | |
|---|---|
| 100 | erstes Objektiv |
| 100' | zweites Objektiv |

| | |
|---|---|
| 200 | erste Bildstabilisierungseinheit |
| 200' | zweite Bildstabilisierungseinheit |
| 201 | erste Linseneinheit |
| 201' | zweite Linseneinheit |
| 202 | erstes Prismenumkehrsystem |
| 202' | zweites Prismenumkehrsystem |
| 203 | erste konkave Seite |
| 203' | zweite konkave Seite |
| 204 | erstes Prisma |
| 204' | drittes Prisma |
| 205 | zweites Prisma |
| 205' | viertes Prisma |
| 206 | erster Gelenkpunkt |
| 206' | zweiter Gelenkpunkt |
| 207 | erste Achse |
| 207' | dritte Achse |
| 208 | zweite Achse |
| 208' | vierte Achse |
| 209 | erste Austrittsfläche |
| 209' | zweite Austrittsfläche |

| | |
|---|---|
| 300 | erstes Okular |
| 300' | zweites Okular |

| | |
|---|---|
| L1 | erste Linse |
| L2 | zweite Linse |
| L3 | dritte Linse |
| L4 | vierte Linse |
| L5 | fünfte Linse |
| L6 | sechste Linse |
| L7 | siebte Linse |
| L8 | achte Linse |
| L9 | neunte Linse |

L10     zehnte Linse
L11     elfte Linse
L12     zwölfte Linse
L13     dreizehnte Linse
L14     vierzehnte Linse

BE      erste Bildebene
BE'     zweite Bildebene
O       Objekt

**Patentansprüche**

1.  Optisches System (1) zur Abbildung eines Objekts (O), mit

    - mindestens einem ersten Objektiv (100),
    - mindestens einer ersten Bildstabilisierungseinheit (200), und
    - mindestens einem ersten Okular (300),

    wobei

    - von dem ersten Objektiv (100) in Richtung des ersten Okulars (300) gesehen zunächst das erste Objektiv (100), dann die erste Bildstabilisierungseinheit (200) und dann das erste Okular (300) entlang einer ersten optischen Achse (10) angeordnet sind,
    - die erste Bildstabilisierungseinheit (200) kardanisch um einen ersten Gelenkpunkt (206) drehbar gelagert ist, und wobei
    - der erste Gelenkpunkt (206) zwischen dem ersten Objektiv (100) und dem ersten Okular (300) angeordnet ist,
    - die erste Bildstabilisierungseinheit (200) mindestens eine erste Linseneinheit (201) und mindestens ein erstes optisches Element (202) umfasst, wobei die erste Linseneinheit (201) und das erste optische Element (202) derart angeordnet sind, dass die erste Linseneinheit (201) zusammen mit dem ersten optischen Element (202) kardanisch um den ersten Gelenkpunkt (206) drehbar gelagert ist, und wobei das erste optische Element (202) als erstes Prismenumkehrsystem ausgebildet ist,

    **dadurch gekennzeichnet, dass** die erste Linseneinheit (201) zur Vermeidung einer störenden Koma als eine erste Meniskuslinse ausgebildet ist und negative Brechkraft aufweist.

2.  Optisches System (1) nach Anspruch 1, **dadurch gekennzeichnet, dass** die erste Linseneinheit (201) zwischen dem ersten Objektiv (100) und dem ersten optischen Element (202) angeordnet ist.

3.  Optisches System (1) nach Anspruch 1 oder 2, **dadurch gekennzeichnet, dass**

    - die erste Linseneinheit (201) eine erste Brennweite aufweist,
    - das erste Objektiv (100) eine zweite Brennweite aufweist, und dass
    - für die erste Brennweite und die zweite Brennweite folgende Beziehung gilt:

$$|f_1| > 2 \cdot f_2$$

    wobei $f_1$ der ersten Brennweite entspricht und wobei $f_2$ der zweiten Brennweite entspricht.

4.  Optisches System (1) nach einem der vorangehenden Ansprüche, **dadurch gekennzeichnet, dass** die erste Linseneinheit (201) nur eine einzelne Linse aufweist.

5.  Optisches System (1) nach einem der vorangehenden Ansprüche, **dadurch gekennzeichnet, dass**

    - die erste Meniskuslinse eine erste konkave Seite (203) aufweist, welche in Richtung des ersten Objektivs (100) orientiert ist.

**6.** Optisches System (1) nach einem der vorangehenden Ansprüche, **dadurch gekennzeichnet, dass** das optische System (1) ein erstes Gehäuse (2) aufweist, wobei das erste Objektiv (100), die erste Bildstabilisierungseinheit (200) und das erste Okular (300) in dem ersten Gehäuse (2) angeordnet sind.

**7.** Optisches System (1) nach einem der vorangehenden Ansprüche, **dadurch gekennzeichnet, dass** das optische System (1) folgende weiteren Merkmale aufweist:

- mindestens ein zweites Objektiv (100'),
- mindestens eine zweite Bildstabilisierungseinheit (200'), und
- mindestens ein zweites Okular (300'),

wobei

- von dem zweiten Objektiv (100') in Richtung des zweiten Okulars (300') gesehen zunächst das zweite Objektiv (100'), dann die zweite Bildstabilisierungseinheit (200') und dann das zweite Okular (300') entlang einer zweiten optischen Achse (11) angeordnet sind,
- die zweite Bildstabilisierungseinheit (200') kardanisch um einen zweiten Gelenkpunkt (206') drehbar gelagert ist,
- der zweite Gelenkpunkt (206') zwischen dem zweiten Objektiv (100') und dem zweiten Okular (300') angeordnet ist, und wobei
- die zweite Bildstabilisierungseinheit (200') mindestens eine zweite Linseneinheit (201') und mindestens ein zweites optisches Element (202') umfasst, wobei die zweite Linseneinheit (201') und das zweite optische Element (202') derart angeordnet sind, dass die zweite Linseneinheit (201') zusammen mit dem zweiten optischen Element (202') kardanisch um den zweiten Gelenkpunkt (206') drehbar gelagert ist, wobei das zweite optische Element (202') als zweites Prismenumkehrsystem ausgebildet ist.

**8.** Optisches System (1) nach Anspruch 7, **dadurch gekennzeichnet, dass** die zweite Linseneinheit (201') zwischen dem zweiten Objektiv (200') und dem zweiten optischen Element (202') angeordnet ist.

**9.** Optisches System (1) nach Anspruch 7 oder 8, **dadurch gekennzeichnet, dass**

- die zweite Linseneinheit (201') eine dritte Brennweite aufweist,
- das zweite Objektiv (100') eine vierte Brennweite aufweist, und dass
- für die dritte Brennweite und die vierte Brennweite folgende Beziehung gilt:

$$\left| f_3 \right| > 2 \cdot f_4$$

wobei $f_3$ der dritten Brennweite entspricht und wobei $f_4$ der vierten Brennweite entspricht.

**10.** Optisches System (1) nach einem der Ansprüche 7 bis 9, **dadurch gekennzeichnet, dass** das optische System (1) eines der folgenden Merkmale aufweist:

- die zweite Linseneinheit (201') weist nur eine einzelne Linse auf; oder
- die zweite Linseneinheit (201') weist mindestens zwei Linsen auf.

**11.** Optisches System (1) nach einem der Ansprüche 7 bis 10, **dadurch gekennzeichnet, dass** das optische System (1) mindestens eines der folgenden Merkmale aufweist:

- die zweite Linseneinheit (201') weist negative Brechkraft auf;
- die zweite Linseneinheit (201') ist als eine zweite Meniskuslinse ausgebildet; oder
- die zweite Linseneinheit (201') ist als eine zweite Meniskuslinse ausgebildet, wobei die zweite Meniskuslinse eine zweite konkave Seite (203') aufweist, welche in Richtung des zweiten Objektivs (100') orientiert ist.

**12.** Optisches System (1) nach einem der Ansprüche 7 bis 11, **dadurch gekennzeichnet, dass** das optische System (1) ein zweites Gehäuse (3) aufweist, wobei das zweite Objektiv (100'), die zweite Bildstabilisierungseinheit (200') und das zweite Okular (300') in dem zweiten Gehäuse (3) angeordnet sind.

**13.** Optisches System (1) nach einem der vorangehenden Ansprüche, aber stets in Verbindung mit Ansprüchen 6 und 12, **dadurch gekennzeichnet, dass**

- das erste Gehäuse (2) mit dem zweiten Gehäuse (3) über mindestens eine Knickbrücke (4) verbunden ist,
- die Knickbrücke (4) ein an dem ersten Gehäuse (2) angeordnetes erstes Scharnierteil (5) aufweist, und dass
- die Knickbrücke (4) ein an dem zweiten Gehäuse (3) angeordnetes zweites Scharnierteil (6) aufweist.

**14.** Optisches System (1) nach Ansprüchen 6 und 12, **dadurch gekennzeichnet, dass** das optische System (1) mindestens eines der folgenden Merkmale aufweist:

- das erste Gehäuse (2) ist als Tubus ausgebildet, oder
- das zweite Gehäuse (3) ist als Tubus ausgebildet.

**15.** Optisches System (1) nach einem der vorangehenden Ansprüche, **dadurch gekennzeichnet, dass** das optische System (1) eines der folgenden Merkmale aufweist:

- das optische System (1) ist als binokulares Fernglas, als Spektiv oder als Fernrohr ausgebildet; oder
- das optische System (1) weist eine Vergrößerung im Bereich von 8 bis 80 auf.

**16.** Optisches System (1) nach einem der Ansprüche 1 bis 6, **dadurch gekennzeichnet, dass** das optische System (1) als monokulares Fernglas ausgebildet ist.

**Claims**

**1.** Optical system (1) for imaging an object (O), having

- at least a first objective (100),
- at least a first image stabilizing unit (200) and
- at least a first eyepiece (300),

wherein,

- as seen in the direction of the first eyepiece (300) from the first objective (100), the first objective (100) is arranged first along a first optical axis (10), then followed by the first image stabilizing unit (200) and then followed by the first eyepiece (300),
- the first image stabilizing unit (200) is rotatably mounted in cardan-joint fashion about a first hinge point (206), and wherein
- the first hinge point (206) is arranged between the first objective (100) and the first eyepiece (300),
- the first image stabilizing unit (200) comprises at least a first lens unit (201) and at least a first optical element (202), wherein the first lens unit (201) and the first optical element (202) are arranged such that the first lens unit (201) is, together with the first optical element (202), rotatably mounted in cardan-joint fashion about the first hinge point (206), and wherein the first optical element (202) is embodied as a first prism erecting system,

**characterized in that**
the first lens unit (201) is embodied as a first meniscus lens in order to avoid a bothersome coma and has negative refractive power.

**2.** Optical system (1) according to Claim 1, **characterized in that** the first lens unit (201) is arranged between the first objective (100) and the first optical element (202).

**3.** Optical system (1) according to Claim 1 or 2, **characterized in that**

- the first lens unit (201) has a first focal length,
- the first objective (100) has a second focal length and **in that**
- the following relationship applies to the first focal length and the second focal length:

$$\left| f_1 \right| \; > \; 2 \cdot f_2,$$

where $f_1$ corresponds to the first focal length and where $f_2$ corresponds to the second focal length.

4.  Optical system (1) according to one of the preceding claims, **characterized in that** first lens unit (201) only has a single lens.

5.  Optical system (1) according to one of the preceding claims, **characterized in that**

    - the first meniscus lens has a first concave side (203), which is oriented in the direction of the first objective (100).

6.  Optical system (1) according to one of the preceding claims, **characterized in that** the optical system (1) has a first housing (2), wherein the first objective (100), the first image stabilizing unit (200) and the first eyepiece (300) are arranged in the first housing (2).

7.  Optical system (1) according to one of the preceding claims, **characterized in that** the optical system (1) has the following further features:

    - at least a second objective (100'),
    - at least a second image stabilizing unit (200'), and
    - at least a second eyepiece (300'),

    wherein,

    - as seen in the direction of the second eyepiece (300') from the second objective (100'), the second objective (100') is arranged first along a second optical axis (11), then followed by the second image stabilizing unit (200') and then followed by the second eyepiece (300'),
    - the second image stabilizing unit (200') is rotatably mounted in cardan-joint fashion about a second hinge point (206'),
    - the second hinge point (206') is arranged between the second objective (100') and the second eyepiece (300'), and wherein
    - the second image stabilizing unit (200') comprises at least a second lens unit (201') and at least a second optical element (202'), wherein the second lens unit (201') and the second optical element (202') are arranged such that the second lens unit (201') is, together with the second optical element (202'), rotatably mounted in cardan-joint fashion about the second hinge point (206'), wherein the second optical element (202') is embodied as a second prism erecting system.

8.  Optical system (1) according to Claim 7, **characterized in that** the second lens unit (201') is arranged between the second objective (200') and the second optical element (202').

9.  Optical system (1) according to Claim 7 or 8, **characterized in that**

    - the second lens unit (201') has a third focal length,
    - the second objective (100') has a fourth focal length and **in that**
    - the following relationship applies to the third focal length and the fourth focal length:

$$\left| f_3 \right| \; > \; 2 \cdot f_4,$$

    where $f_3$ corresponds to the third focal length and where $f_4$ corresponds to the fourth focal length.

10. Optical system (1) according to one of Claims 7 to 9, **characterized in that** the optical system (1) has one of the following features:

    - the second lens unit (201') only has a single lens; or
    - the second lens unit (201') has at least two lenses.

**11.** Optical system (1) according to one of Claims 7 to 10, **characterized in that** the optical system (1) has at least one of the following features:

- the second lens unit (201') has negative refractive power;
- the second lens unit (201') is embodied as a second meniscus lens; or
- the second lens unit (201') is embodied as a second meniscus lens, wherein the second meniscus lens has a second concave side (203'), which is oriented in the direction of the second objective (100').

**12.** Optical system (1) according to one of Claims 7 to 11, **characterized in that** the optical system (1) has a second housing (3), wherein the second objective (100'), the second image stabilizing unit (200') and the second eyepiece (300') are arranged in the second housing (3).

**13.** Optical system (1) according to one of the preceding claims, but always in conjunction with Claims 6 and 12, **characterized in that**

- the first housing (2) is connected to the second housing (3) via at least one folding bridge (4),
- the folding bridge (4) has a first hinge part (5) arranged on the first housing (2) and **in that**
- the folding bridge (4) has a second hinge part (6) arranged on the second housing (3).

**14.** Optical system (1) according to Claims 6 and 12, **characterized in that** the optical system (1) has at least one of the following features:

- the first housing (2) is embodied as a tube, or
- the second housing (3) is embodied as a tube.

**15.** Optical system (1) according to one of the preceding claims, **characterized in that** the optical system (1) has one of the following features:

- the optical system (1) is embodied as binocular field glasses, as a spotting scope or as a telescope; or
- the optical system (1) has a magnification in the range from 8 to 80.

**16.** Optical system (1) according to one of Claims 1 to 6, **characterized in that** the optical system (1) is embodied as monocular field glasses.

**Revendications**

**1.** Système optique (1) permettant de former l'image d'un objet (O), comprenant

- au moins un premier objectif (100),
- au moins une première unité de stabilisation d'image (200), et
- au moins un premier oculaire (300),

dans lequel

- vus depuis le premier objectif (100) en direction du premier oculaire (300), le premier objectif (100) en premier lieu, puis la première unité de stabilisation d'image (200), puis le premier oculaire (300) sont disposés le long d'un premier axe optique (10),
- la première unité de stabilisation d'image (200) est montée à la cardan de manière à pouvoir tourner autour d'un premier point d'articulation (206), et dans lequel
- le premier point d'articulation (206) est situé entre le premier objectif (100) et le premier oculaire (300),
- la première unité de stabilisation d'image (200) comprend au moins une première unité à lentilles (201) et au moins un premier élément optique (202), dans lequel la première unité à lentilles (201) et le premier élément optique (202) sont disposés de telle manière que la première unité à lentilles (201) conjointement avec le premier élément optique (202) est montée à la Cardan de manière à pouvoir tourner autour du premier point d'articulation (206), et dans lequel le premier élément optique (202) est réalisé sous la forme d'un premier système d'inversion à prisme,

**caractérisé en ce que**
la première unité à lentilles (201) est réalisée sous la forme d'une première lentille ménisque pour éviter une coma perturbatrice et présente une puissance optique négative.

2. Système optique (1) selon la revendication 1, **caractérisé en ce que** la première unité à lentilles (201) est disposée entre le premier objectif (100) et le premier élément optique (202).

3. Système optique (1) selon la revendication 1 ou 2, **caractérisé en ce que**

   - la première unité à lentilles (201) présente une première distance focale,
   - le premier objectif (100) présente une deuxième distance focale, et **en ce que**
   - pour la première distance focale et la deuxième distance focale, on a la relation suivante :

$$\left| f_1 \right| > 2 \cdot f_2$$

où $f_1$ correspond à la première distance focale et où $f_2$ correspond à la deuxième focale.

4. Système optique (1) selon l'une des revendications précédentes, **caractérisé en ce que** la première unité à lentilles (201) ne comporte qu'une seule lentille.

5. Système optique (1) selon l'une des revendications précédentes, **caractérisé en ce que**

   - la première lentille ménisque présente une première face concave (203) orientée en direction du premier objectif (100).

6. Système optique (1) selon l'une des revendications précédentes, **caractérisé en ce que** le système optique (1) comporte un premier boîtier (2), dans lequel le premier objectif (100), la première unité de stabilisation d'image (200) et le premier oculaire (300) sont disposés dans le premier boîtier (2).

7. Système optique (1) selon l'une des revendications précédentes, **caractérisé en ce que** le système optique (1) présente les autres caractéristiques suivantes :

   - au moins un deuxième objectif (100'),
   - au moins une deuxième unité de stabilisation d'image (200'), et
   - au moins un deuxième oculaire (300'),

   dans lequel

   - vus depuis le deuxième objectif (100') en direction du deuxième oculaire (300'), le deuxième objectif (100') en premier lieu, puis la deuxième unité de stabilisation d'image (200'), puis le deuxième oculaire (300') sont disposés le long d'un deuxième axe optique (11),
   - la deuxième unité de stabilisation d'image (200') est montée à la cardan de manière à pouvoir tourner autour d'un deuxième point d'articulation (206'),
   - le deuxième point d'articulation (206') est situé entre le deuxième objectif (100') et le deuxième oculaire (300'), et dans lequel
   - la deuxième unité de stabilisation d'image (200') comprend au moins une deuxième unité à lentilles (201') et au moins un deuxième élément optique (202'), dans lequel la deuxième unité à lentilles (201') et le deuxième élément optique (202') sont disposés de telle manière que la deuxième unité à lentilles (201') conjointement avec le deuxième élément optique (202') est montée à la cardan de manière à pouvoir tourner autour du deuxième point d'articulation (206'), dans lequel le deuxième élément optique (202') est réalisé sous la forme d'un deuxième système d'inversion à prisme.

8. Système optique (1) selon la revendication 7, **caractérisé en ce que** la deuxième unité à lentilles (201') est située entre le deuxième objectif (200') et le deuxième élément optique (202').

9. Système optique (1) selon la revendication 7 ou 8, **caractérisé en ce que**

- la deuxième unité à lentilles (201') présente une troisième distance focale,
- le deuxième objectif (100') présente une quatrième distance focale, et **en ce que**
- pour la troisième distance focale et la quatrième distance focale, on a la relation suivante :

$$\left| f_3 \right| \; > \; 2 \cdot f_4$$

où $f_3$ correspond à la troisième distance focale et où f4 est la quatrième distance focale.

**10.** Système optique (1) selon l'une des revendications 7 à 9, **caractérisé en ce que** le système optique (1) présente l'une des caractéristiques suivantes :

- la deuxième unité à lentilles (201') ne comporte qu'une seule lentille ; ou
- la deuxième unité à lentilles (201') comporte au moins deux lentilles.

**11.** Système optique (1) selon l'une des revendications 7 à 10, **caractérisé en ce que** le système optique (1) présente au moins l'une des caractéristiques suivantes :

- la deuxième unité à lentilles (201') possède une puissance optique négative ;
- la deuxième unité à lentilles (201') est réalisée sous la forme d'une deuxième lentille ménisque ; ou
- la deuxième unité à lentilles (201') est réalisée sous la forme d'une deuxième lentille ménisque, dans lequel la deuxième lentille ménisque présente une deuxième face concave (203') orientée en direction du deuxième objectif (100') .

**12.** Système optique (1) selon l'une des revendications 7 à 11, **caractérisé en ce que** le système optique (1) comporte un deuxième boîtier (3), dans lequel le deuxième objectif (100'), la deuxième unité de stabilisation d'image (200') et le deuxième oculaire (300') sont disposés dans le deuxième boîtier (3).

**13.** Système optique (1) selon l'une des revendications précédentes, néanmoins toujours en relation avec les revendications 6 et 12, **caractérisé en ce que**

- le premier boîtier (2) est relié au deuxième boîtier (3) par au moins un pont de flexion (4),
- le pont de flexion (4) comporte une première partie formant charnière (5) disposée sur le premier boîtier (2), et **en ce que**
- le pont de flexion (4) présente une deuxième partie formant charnière (6) disposée sur le deuxième boîtier (3) .

**14.** Système optique (1) selon les revendications 6 et 12, **caractérisé en ce que** le système optique (1) présente au moins l'une des caractéristiques suivantes :

- le premier boîtier (2) est réalisé sous la forme d'un tube, ou
- le deuxième boîtier (3) est réalisé sous la forme d'un tube.

**15.** Système optique (1) selon l'une des revendications précédentes, **caractérisé en ce que** le système optique (1) présente l'une des caractéristiques suivantes :

- le système optique (1) est réalisé sous la forme de jumelles, d'une lunette de visée ou d'un télescope ; ou
- le système optique (1) présente un grossissement se situant dans la plage de 8 à 80.

**16.** Système optique (1) selon l'une des revendications 1 à 6, **caractérisé en ce que** le système optique (1) est réalisé sous la forme de jumelles monoculaires.

Fig. 1

Fig. 2

Fig. 3

EP 2 802 932 B1

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2353101 C3
- DE 3933255 C2
- DE 2834158 C3

- US 6067194 A
- US 3608995 A
- US 3531176 A